# EUROPÄISCHE PATENTSCHRIFT

(11) **EP 0 590 445 B1**
(45) Veröffentlichungstag und Bekanntmachung des Hinweises auf die Patenterteilung: **15.07.1998**
(21) Anmeldenummer: 93115034.6
(22) Anmeldetag: 18.09.1993
(51) Int. Cl.: B60R 13/02

(54) **Vibrationsdämpfende Dachhimmelkonstruktion**
Vibration absorbing headliner assembly
Construction d'un ciel de pavillon absorbant les vibrations

(30) Priorität: 23.09.1992 CH 2974/92
(43) Veröffentlichungstag der Anmeldung: 06.04.1994
(73) Patentinhaber: RIETER AUTOMOTIVE (INTERNATIONAL) AG, CH-8702 Zollikon (CH)
(72) Erfinder: Fortez, Maurice, F-92170 Vanves (FR); Alts, Thorsten, Prof. Dr., D-6101 Gross-Bieberau (DE)
(74) Vertreter: Ritscher, Thomas, Dr.

(56) Entgegenhaltungen:
- EP-A- 0 106 750
- EP-A- 0 255 332
- EP-A- 0 474 593
- PATENT ABSTRACTS OF JAPAN vol. 13, no. 398 (M-866)(3746) 5. September 1989 & JP-A-01 141 140 (SUZUKI MOTOR CO LTD) 2. Juni 1989
- PATENT ABSTRACTS OF JAPAN vol. 14, no. 382 (C-749)(4325) 17. August 1990 & JP-A-02 139 481 (DYNIC CORP.) 29. Mai 1990

## Beschreibung

Die vorliegende Erfindung betrifft ein vibrationsdämpfendes Fahrzeugdach mit einem Karosserieteil, mit einem schallabsorbierenden Formteil aus porösem Material und mit formfestem Material, das zusammen mit dem porösen Material des Formteils (5) einen selbsttragenden Dachhimmel bildet.

Fahrzeugdächer mit solchen Dachhimmeln finden ihre Verwendung in Fahrzeugen aller Art und vorzugsweise in Personenwagen, Reisebussen, Lastwagenführerkabinen, Eisenbahnen oder Flugzeugen und können auch in Maschinengehäusen jeder Art eingesetzt werden. Dachhimmel wurden ursprünglich lediglich aus ästhetischen Gründen, d.h. zu Verkleidungszwecken eingebaut. Heutzutage haben sie aber immer häufiger auch technische Aufgaben zu erfüllen und werden insbesondere zur Schallabsorbtion eingesetzt. So ist es bekannt, an die einzelnen Karosserieteile offenporige Schaumstoff- oder Faservliesmatten zu kleben, welche das im Innern der Fahrgastkabinen erzeugte Schallfeld in hohem Masse absorbieren. Es hat sich jedoch gezeigt, dass das durch die Vibrationen der einzelen Karosserieteile und insbesondere des Fahrzeugdachs erzeugte Schallfeld von diesen elastischen Matten nur ungenügend oder gar nicht gedämpft wird. Diese tieffrequenten Vibrationen sind jedermann als unangenehmes Brummen bekannt.

Man hat deshalb auch schon versucht die vibrierenden Karosserieteile durch zusätzliche Streben oder durch grossflächiges Verkleben geeigneter Materialien zu versteifen. Diese Massnahmen eignen sich jedoch nur in begrenztem Mass zur Vibrationsdämpfung, führen zu einer unerwünschten Gewichtszunahme der gesamten Dachhimmelkonstruktion, im folgenden auch Fahrzeugdach genannt und verteuern die Fabrikation der einzelnen Fahrzeuge.
Ein solches Fahrzeugdach ist bspw. in der EP-A-0'255'332 beschrieben. Dieses umfasst ein Karosserieteil und einen aus mehreren Schichten aufgebauten Dachhimmel. Dieser Dachhimmel besteht aus einer steifen Trägerschicht, die fahrgastraumseitig mit einem weichen schallabsorbierenden Schaum und karosserieseitig mit einer vibrationsdämpfenden viskoelastischen Schwerschicht verklebt ist. Diese viskoelastische Schicht ist vorzugsweise geschlossenporig, nur schwach luftdurchlässig, besteht aus einer bituminösen Schwerschicht und ist vorzugsweise am Karosserieteil angeklebt. In einer besonderen Ausführungsform wird diese bituminöse Schwerschicht durch die steife Trägerschicht an das Karosserieteil angepresst, um dessen Vibrationen wirksam dämpfen zu können.

Es ist deshalb die Aufgabe der vorliegenden Erfindung ein Fahrzeugdach zu schaffen, welches die Nachteile der bekannten Dächer nicht aufweist und insbesondere ein Fahrzeugdach, welches die Vibrationen im Bereich unterhalb von 200 Hertz, insbesondere im Bereich von 30 - 150 Hertz ohne Gewichtszunahme wirkungsvoll dämpft und dabei ihre schallabsorbierende Wirksamkeit vollumfänglich beibehält.

Diese Aufgabe wird erfindungsgemäss durch ein Fahrzeugdach mit den Merkmalen des Anspruchs 1 und insbesondere mit einem Dachhimmel mit den Merkmalen des Anspruchs 5 gelöst.

Die erfindungsgemässe Fahrzeugdach zeichnet sich im wesentlichen durch die Merkmale des vorliegenden Anspruchs 1 aus. Das poröse schallabsorbierende Formteil weist an seiner dem Karosserieteil zugewandten Grenzschicht eine bspw. waffelartig strukturierte Oberfläche auf Diese Oberfläche liegt direkt an dem zu dämpfenden Karosserieteil an. Dabei ist die Struktur der Oberfläche massgebend. Sinn dieser Struktur ist es, die durch die Vibration des Karosserieteils verursachten Luftströmungen in Richtung der Anlagefläche weniger zu behindern als Luftströmungen quer dazu. Die optimale Dimensionierung dieser Luftwiderstandsstruktur liegt im Bereich des technischen Könnens und Wissens des Fachmanns. Ein weiteres wesentliches Merkmal der erfindungsgemässen Konstruktion ist darin zu sehen, dass das Formteil im wesentlichen selbsttragend ist, d.h. nicht am Karosserieteil aufgehängt zu werden braucht. Es versteht sich, dass das Formteil auch punktuell am Karosserieteil fixiert werden kann, insbesondere um schall- und vibrationsdämpfende Deformationen in den Auflagestellen resp. - stegen des Formteils zu erzwingen.

In einer bevorzugten Ausführungsform besteht das schallabsorbierende Formteil aus einem verpressten Faservlies, welches zusätzlich zu der gewaffelten Oberflächenstruktur versteifend wirkende Vertiefungen aufweist. In den Bereichen dieser gitterförmig angebrachten Vertiefungen ist das Faservlies äusserst stark verpresst und führt zu einer äusserst steifen Struktur. Diese steife innere Struktur des Formteils erlaubt dieses Formteil spannungsfrei an das Karosserieteil anzulegen. Vorteilhafterweise können diese Vertiefungen auch für die Verlegung von Elektro- oder Antennenkabel verwendet werden. Es versteht sich auch, dass diese Vertiefungen mit einem elektrisch isolierenden und/oder einem glasfaserverstärkten Material ausgelegt sein können.

Im folgenden soll die Erfindung anhand der Figuren näher erläutert werden; dabei zeigt:
Figur 1 einen Querschnitt durch ein Fahrzeugdach bekannter Art;
Figur 2 einen Querschnitt durch ein Fahrzeugdach mit verbesserter Vibrationsdämpfung;
Figur 3 einen Querschnitt durch eine erfindungsgemässes Fahrzeugdach;
Figur 4 eine Aufsicht auf die Oberflächenstruktur eines Formteils des Fahrzeugdachs;

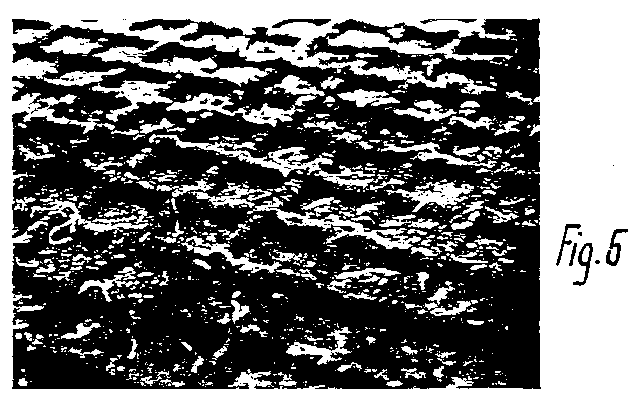

Figur 5 eine Fotografie der Oberfläche eines bevorzugten Formteils;
Figur 6 die Schwingungsdämpfungs-Messkurve eines unbeschichteten Karosserieteils;
Figur 7 die Schwingungsdämpfungs-Messkurve eines konventionell beschichteten Karosserieteils;
Figur 8 die Schwingungsdämpfungs-Messkurve eines erfindungsgemäss ausgerüsteten Karosserieteils.

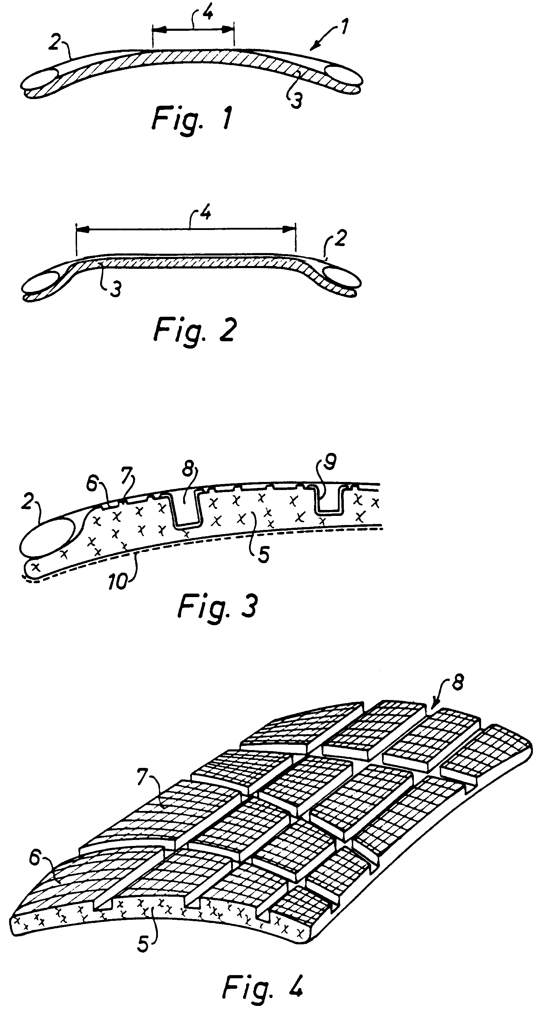

Der in Figur 1 dargestellte Querschnitt eines bekannten Fahrzeugdachs 1 zeigt ein Karosserieteil 2 wie es üblicherweise aus einem Blechteil geformt ist und einer schallabsorbierenden Matte 3, welche an dieses Blechteil 2 angeklebt ist. Diese schallabsorbierende Matte 3 besteht aus akustischen Gründen aus einem offenporigen und möglichst elastischen Material bzw. aus einem schaumgummiähnlichem Material oder aus einem weichen Faservlies. Zur Versteifung des Karosserieteils 2 wird üblicherweise eine Klebefläche 4 so gross wie möglich gewählt.

Figur 2 zeigt einen Querschnitt durch eine derartig grossflächig verklebte Dachhimmelkonstruktion. Im Unterschied dazu ist das Formteil 5 selbsttragend und liegt nur partiell am Karosserieteil 2 auf.

Figur 3 zeigt das Formteil 5. Dieses besteht in einer bevorzugten Ausführungsform aus einem in geeigneter Weise verpressten Faservlies 5 und weist eine Gesamtdicke von weniger als 14mm auf. Solche Faservliese bestehen aus einem Gemisch von natürlichen und synthetischen Fasern, welche mit geeigneten Kunstharzen gebunden sind. Ein solches Produkt ist unter dem Namen TACA im Handel erhältlich und ist hier nur bspw. genannt. Die dem Karosserieteil 2 zugewandte Grenzschicht dieses Faservlieses 5 ist in besonderer Weise strukturiert. In einer bevorzugten Ausführungsform ist diese Seite waffelartig geprägt, um den Luftwiderstand für Luftbewegungen in Flächenrichtung geringer zu halten als denjenigen für Luftbewegungen in Dickenrichtung. Dabei sind die das waffelförmige Muster bildenden Prägeflächen 6 zwischen den Stegen 7 um ca. 2mm in das Formteil 5 eingeprägt.

Das Formteil 5 ist selbsttragend und braucht nicht am Karosserieteil 2 befestigt zu werden. Dabei ist es unwesentlich, ob die selbsttragende Eigenschaft des Formteil - im folgenden auch Formstabilität genannt - aus lokal versteiften Bereichen oder Schichten entsteht oder durch Einfügen eines tragfähigen Gitters zustande kommt. Erfindungswesentlich ist jedoch das Aufliegen der einzelnen Stege 7 der Waffelstruktur am Karosserieteil 2. Hilfsweise kann deshalb mindestens ein Teil dieser Stege 7 am Karosserieteil 2 verklebt oder angeschmolzen sein.

In einer weiteren Ausführungsform ist das Formteil 5 aus verschieden verdichteten Lagen gebildet. Insbesondere ist die dem Fahrgastraum zugewandte Seite des Formteils 5 stärker verdichtet und damit so stabil ausgebildet, dass das gesamte Formteil 5 als selbsttragendes Bauteil fest montiert werden kann. Dazu braucht es lediglich an den Rändern fixiert zu werden.

Es versteht sich, dass dieses Formteil 5 auch sandwichartig aus mehreren mehr oder weniger verdichteten Schichten mit oder ohne Zwischenlagen, insbesondere mikroporösen Folien aufgebaut sein kann. Die spezifische akustische Optimierung hängt wesentlich von den Dimensionen und der Geometrie der einzelnen Karosserieteile ab und liegt im Bereich des fachmännischen Könnens. Erfindungswesentlich ist jedoch der in geschilderter Weise anisotrope Luftwiderstand des Formteils 5 und das lediglich partielle Anliegen am Karosserieteil, welches nur durch dessen selbsttragende Festigkeit ermöglicht wird.

Das derart aufgebaute Fahrzeugdach erweist sich als überraschend einfach in der Herstellung, d.h. der Dachhimmel ist insbesondere einstückig und zeigt im tieffrequenten Bereich ein gegenüber gebräuchlichen Systemen überraschend gutes Dämpfungsverhalten. Erfindungsgemäss werden mit dieser Konstruktion auch die tieffrequenten Karosserievibrationen unterhalb 200 Hertz in wirksamer Weise gedämpft.

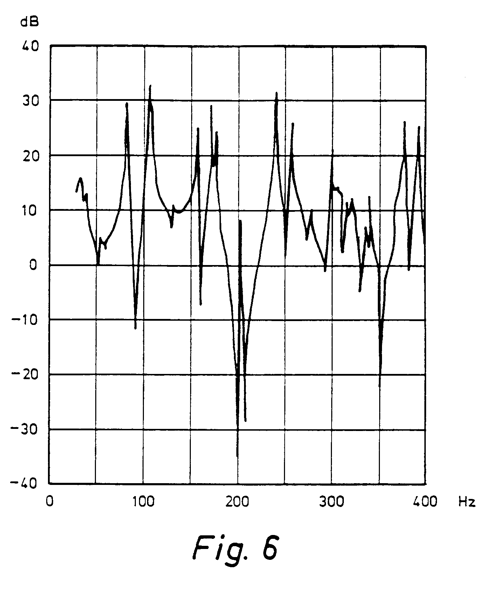

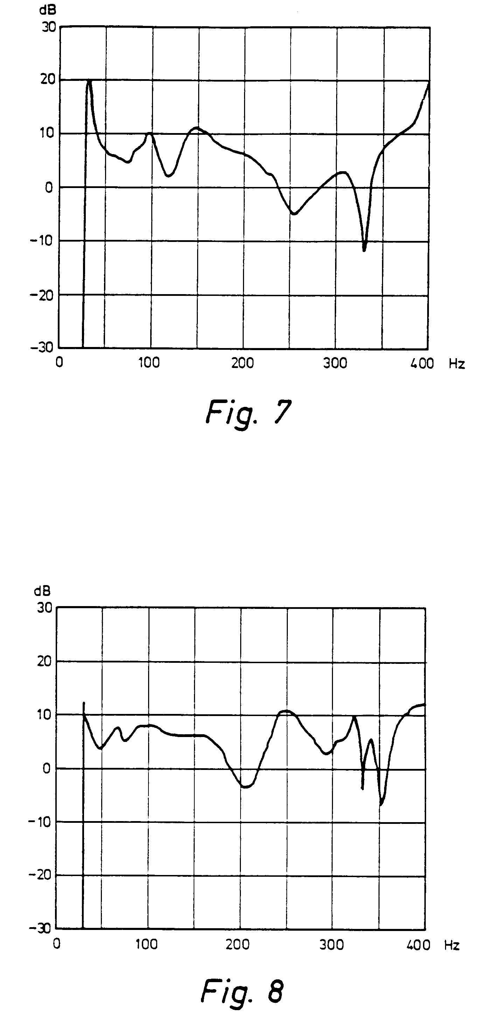

Dies wird insbesondere aus den Figuren 6, 7 und 8 deutlich, von denen Figur 7 die Schwingungsdämpfungs-Messkurve eines konventionellen Dämpfungssystems mit einer angeschmolzenen Bitumenschicht zeigt. Dem gegenüber zeigt die Schwingungsdämpfungs-Messkurve eines erfindungsgemässen Feder-Masse-Systems in Figur 8 eine deutliche Verbesserung, insbesondere im Frequenzbereich unterhalb 220 Hertz. Als Referenz dazu zeigt Figur 6 die Schwingungsdämpfungs-Messkurve des ungedämpften Systems.

In einer Weiterbildung der erfindungsgemässen Dachhimmelkonstruktion sind in die geprägten Seiten des Formteils 5 Vertiefungen 8 in gitterförmiger Anordnung eingeformt. Diese Vertiefungen weisen in einer ersten Ausführungsform eine Tiefe von ca. 10mm auf und werden einfacherweise ebenfalls eingeprägt. Damit werden im Formteil lokale Bereiche mit stark erhöhter Dichte erzeugt und es entsteht im Formteil eine Gitterstruktur aus stark verpresstem und deshalb äussert formfestem Material, welches zur selbsttragenden Stabilität des gesamten Formteils von weiterem Nutzen ist. Die so erzeugten Vertiefungen können selbstverständlich als Kabelschienen verwendet werden, insbesondere für Antennen-, Elektro- oder Lautsprecherkabel. Es ist aus Gründen der Sicherheit selbstverständlich auch möglich, in ein derart ausgeformtes Formteil 5 zusätzliche Schienen 9, vorzugsweise aus glasfaserverstärktem Polyester einzusetzen und mit dem Karosserieteil und/oder Formteil 5 zu verkleben. Diese Schienen 9 wirken gleichzeitig auch als versteifende Streben für das Karosserieteil 2. Es versteht sich, dass diese Vertiefungen 8 auch so in das Formteil 5 eingebracht werden können, dass sich keine nennenswerten lokalen Dichteunterschiede ausbilden und dass dadurch die Gesamtstabilität unbeeinträchtigt bleibt.

Weiterbildungen dieser Konstruktion wurden bereits angedeutet. Insbesondere lässt sich auch die den Fahrgastraum zugewandte Seite mit einer dekorativen Schicht 10 verkleiden.

## Patentansprüche

1. Vibrationsdämpfendes Fahrzeugdach (1) mit einem Karosserieteil (2), mit einem schallabsorbierenden Formteil (5) aus porösem Material und mit formfestem Material, das zusammen mit dem porösen Material des Formteils (5) einen selbsttragenden Dachhimmel (3) bildet, dadurch gekennzeichnet, dass das Formteil (5) auf der dem Karosserieteil (2) zugewandten Seite eine anisotrope Luftwiderstandsstruktur, insbesondere in der Art von eingeprägten Waffelmustern, aufweist, unmittelbar am Karosserieteil (2) spannungsfrei anliegt und mit dem Karosserieteil (2) nur in Randbereichen verbunden ist.

2. Fahrzeugdach nach Anspruch 1, dadurch gekennzeichnet, dass die Formstabilität des Formteils (5) durch eine versteifende Schicht erzeugt ist.

3. Fahrzeugdach nach Anspruch 2, dadurch gekennzeichnet, dass die versteifende Schicht gitterförmig ist.

4. Fahrzeugdach nach einem der vorgehenden Ansprüche 1 bis 3, dadurch gekennzeichnet, dass das Formteil (5) aus einem verpressten Faservlies besteht.

5. Schallabsorbierender Dachhimmel für ein vibrationsdämpfendes Fahrzeugdach nach Anspruch 1, mit einem Formteil aus Faservlies, gekennzeichnet durch eine in das selbsttragende Faservlies (5) eingeprägte anisotrope Luftwiderstandsstruktur, insbesondere in der Art von eingeprägten Waffelmustern.

6. Dachhimmel nach Anspruch 5, dadurch gekennzeichnet, dass dieser aus mehreren unterschiedlich stark verdichteten Schichten besteht.

7. Dachhimmel nach Anspruch 5 oder 6, dadurch gekennzeichnet, dass dieser gitterförmig verteilte Vertiefungen aufweist, deren Bodenbereiche eine gegenüber den anderen Bereichen erhöhte Biegesteifigkeit aufweisen.

8. Dachhimmel nach einem der Ansprüche 5 bis 7, dadurch gekennzeichnet, dass dieser eine waffelähnlich strukturierte Oberfläche aufweist.

## Claims

1. Vibration damping vehicle roofing (1) with a body member (2), having a sound-absorbing moulded part (5) made of a porous material and with form stable material, which together with the porous material of the moulded part (5) form a self-supporting inside roof construction (3), characterized in that the moulded part (5) on the side facing the body member (2) exhibits an anisotropic air resistant structure, in particular an embossed waffle-type pattern, and rests in contact at the vehicle body member (2), being attached thereto only at its peripheral areas.

2. Vehicle roofing according to claim 1, characterized in that the form stability of the moulded part (5) is produced by a stiffening layer.

3. Vehicle roofing according to claim 2, characterized in that the stiffening layer is lattice-shaped.

4. Vehicle roofing according to one of the preceding claims 1 to 3, characterized in that the moulded part (5) is made of a compressed fibre fleece.

5. Sound absorbing inside roof construction for a vibration damping vehicle roofing according to claim 1, having a moulded part made of fibre fleece, characterized by an anisotropic air resistant structure embossed into the self-supporting fibre fleece (5), in particular an embossed waffle-type pattern.

6. Inside roof construction according to claim 5, characterized in that it is composed of several layers having varying degrees of compression.

7. Inside roof construction according to claim 5 or 6, characterized in that it comprises lattice-shaped depressions, whose bottom regions exhibit a flexural yield strength that is higher than in other regions.

8. Inside roof construction according to one of claims 5 to 7, characterized in that it has a waffle-like structured surface.

## Revendications

1. Toit (1) de véhicule amortissant les vibrations comprenant une pièce de carrosserie (2), une pièce de fabrication (5) absorbant le bruit, en matière poreuse, et un matériau indéformable qui forme avec le matériau poreux de la pièce de fabrication (5) un plafond (3) de véhicule autoportant caractérisé en ce que la pièce de fabrication (5) présente sur sa face orientée vers la pièce de carrosserie (2) une structure anisotrope de résistance à l'air, en particulier du type présentant un motif gaufré, que cette pièce de fabrication (5) est apposée directement sans contraintes sur la pièce de carrosserie et n'est reliée avec la pièce de carrosserie uniquement sur par des zones en bordure de pièce.

2. Toit de véhicule selon la revendication 1, caractérisé en ce que la stabilité de forme de la pièce de fabrication (5) est obtenue par une couche rigidifiante.

3. Toit de véhicule selon la revendication 2, caractérisé en ce que la couche rigidifiante présente un quadrillage.

4. Toit de véhicule selon l'une des revendications 1 à 3, caractérisé en ce que la pièce de fabrication est réalisée en un matelas comprimé de fibres non tissées.

5. Plafond absorbant le bruit pour un toit de véhicule amortissant les vibrations selon la revendication 1, avec une pièce de fabrication réalisée en un matelas de fibres non tissées, caractérisé par une structure anisotrope de résistance à l'air matricé dans le matelas auto-portant en fibres non tissées, en particulier du type présentant un motif gaufré.

6. Plafond de véhicule selon la revendication 5, caractérisé en ce que celui-ci est constitué de plusieurs couches plus ou moins fortement comprimées.

7. Plafond de véhicule selon la revendication 5 ou 6, caractérisé en ce que celui-ci présente des nervures réparties en quadrillage, dont le fond présente une résistance à la flexibilité plus élevée par rapport aux autres zones.

8. Plafond de véhicule selon l'une des revendications 5 à 7, caractérisé en ce que celui-ci présente une surface structurée à la manière d'une gaufre.
